# Europäisches Patentamt
# European Patent Office
# Office européen des brevets

(19)

(11) Veröffentlichungsnummer: **0 051 111**

**A1**

(12) ## EUROPÄISCHE PATENTANMELDUNG

(21) Anmeldenummer: **81105725.6**

(22) Anmeldetag: **21.07.81**

(51) Int. Cl.³: **F 02 M 25/06**
**B 01 D 45/12, B 04 C 3/00**

(30) Priorität: **31.10.80 DE 3041070**

(43) Veröffentlichungstag der Anmeldung:
**12.05.82 Patentblatt 82/19**

(84) Benannte Vertragsstaaten:
**DE FR GB**

(71) Anmelder: **ROBERT BOSCH GMBH**
**Postfach 50**
**D-7000 Stuttgart 1(DE)**

(72) Erfinder: **Dobler, Klaus, Dr.**
**Bettäckerstrasse 12**
**D-7016 Gerlingen(DE)**

(72) Erfinder: **Babitzka, Rudolf**
**Birkenweg 11**
**D-7141 Kirchberg(DE)**

(72) Erfinder: **Brettschneider, Johannes, Dr. Dipl.-Ing.**
**Beethovenstrasse 68**
**D-7140 Ludwigsburg(DE)**

(72) Erfinder: **Fischer, Hermann, Dr. Dipl.-Ing.**
**Güntherstrasse 16**
**D-7000 Stuttgart 70(DE)**

(72) Erfinder: **Linder, Ernst, Dipl.-Ing.**
**Uhlandstrasse 24**
**D-7130 Mühlacker(DE)**

(72) Erfinder: **Polach, Wilhelm, Dr. Dipl.-Ing.**
**Strombergstrasse 18**
**D-7141 Mögligen(DE)**

(72) Erfinder: **Sarholz, Walter, Dr.**
**Donnersbergstrasse 40**
**D-7000 Stuttgart 30(DE)**

(54) **Verfahren und Vorrichtung zur Entfernung von festen Bestandteilen aus dem Abgas von Brennkraftmaschinen, insbesondere von Russbestandteilen.**

(57) Es wird ein Verfahren zur Entfernung von festen Bestandteilen aus dem Abgas (4) von Brennkraftmaschinen (1) insbesondere von Rußbestandteilen beschrieben, bei dem mit Hilfe einer geeigneten Trenneinrichtung (6) aus dem Hauptabgasstrom (4) der Brennkraftmaschine zwei Teilströme erzeugt werden, von denen der eine (9,10) mit festen Bestandteilen angereichert und der andere (7) von festen Bestandteilen weitgehendst befreit ist. Der angereicherte Teilstrom wird nunmehr gegebenenfalls unter Mitwirkung von Dosiereinrichtungen (12) der Saugseite (2,11) der Brennkraftmaschine wieder zugeführt. Bei Verwendung einer auf dem Wirkprinzip von Wirbelabscheidern arbeitenden Trenneinrichtung ist bei dieser Ausgestaltung kein Zusatzaufwand für Antriebe von Trenneinrichtungen oder für die Entsorgung von Trenneinrichtungen von dem ausgeschiedenen Ruß notwendig.

Fig.1

R. 6640

Bö/Jä 24.10.1980

Robert Bosch GmbH, 7000 Stuttgart 1

Verfahren und Vorrichtung zur Entfernung von festen
Bestandteilen aus dem Abgas von Brennkraftmaschinen,
insbesondere von Rußbestandteilen

Stand der Technik

Die Erfindung geht aus von einem Verfahren gemäß der
Gattung des Hauptanspruchs. Es ist bekannt, mit Hilfe
eines umlaufenden Filters, der wechselseitig dem ausströmenden Abgas und der der Brennkraftmaschine zuströmenden Frischluft ausgesetzt ist, Ruß aus dem
Abgas dadurch zu entfernen, daß der ausgefilterte
Ruß der Saugseite der Brennkraftmaschine wieder zugeführt wird und in den Brennräumen der Brennkraftmaschine verbrannt wird (DE-OS 22 33 963). Diese
Einrichtung hat den Nachteil, daß der Filter einen
hohen Strömungswiderstand darstellt, der die Gaswechselvorgänge bei der Brennkraftmaschine negativ
beeinflußt. Weiterhin ist nachteiligerweise ein
mechanischer Zusatzantrieb für den Filter notwendig.

Es sind weiterhin Einrichtungen bekannt zum Trennen
eines mit Partikeln beladenen Mediums in einen ersten

...

Teilstrom, der mit einer geringen Menge der genannten
Partikel beladen ist, und in einen zweiten Teilstrom,
der mit den genannten Partikeln angereichert ist
(DE-PS 21 60 415, DE-PS 23 00 869).

Vorteile der Erfindung

Das erfindungsgemäße Verfahren mit den kennzeichnenden Merkmalen des Hauptanspruchs hat demgegenüber
den Vorteil, daß die anfallenden Rußbestandteile
im Abgas einer Brennkraftmaschine wirkungsvoll und
ohne zusätzlichen Energieaufwand ausgeschieden werden
können, ohne daß die Gaswechselvorgänge, insbesondere
der Füllungsgrad der Brennkraftmaschine negativ beeinflußt wird. Insbesondere entfällt eine kostspielige Überwachung des Filters auf seine Funktionsfähigkeit und der Aufwand für einen Zusatzantrieb
eines Filters. Durch die in den Unteransprüchen aufgeführten Maßnahmen sind vorteilhafte Weiterbildungen
der im Hauptanspruch beanspruchten Lösung möglich.
Es werden vorteilhafte Einrichtungen zur Durchführung
des im Hauptanspruch beanspruchten Verfahrens gegeben.

Zeichnung

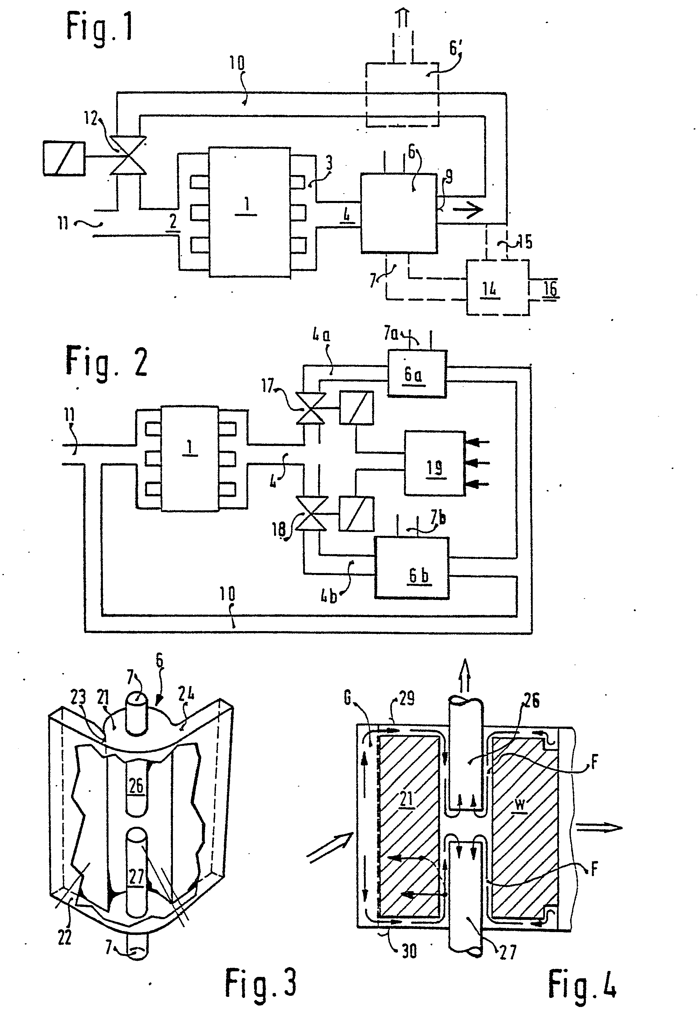

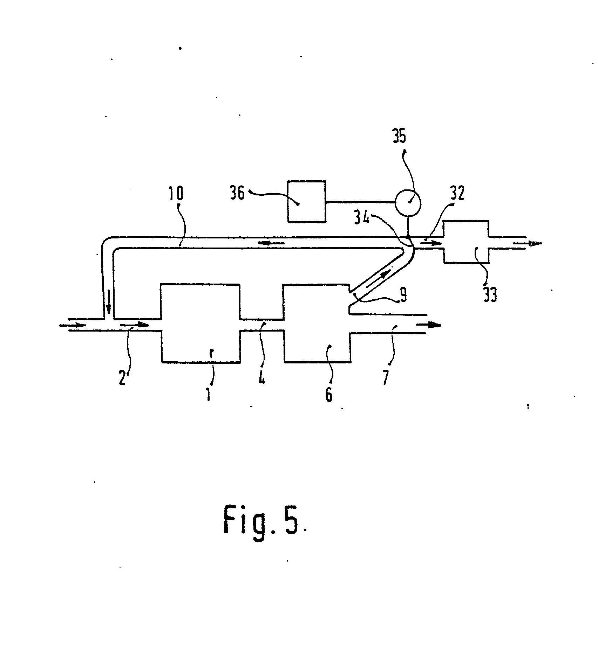

Drei Ausführungsbeispiele der Erfindung sind in der
Zeichnung dargestellt und werden in der nachfolgenden Beschreibung näher erläutert. Es zeigen Fig. 1
ein erstes Ausführungsbeispiel mit einer einzigen
Trenneinrichtung bzw. alternativ in Serie oder parallel
geschalteten zweiten Trenneinrichtung, Fig. 2 eine
Trenneinrichtung mit zwei parallel geschalteten Trenneinrichtungen, Fig. 3 eine erste Ansicht einer beispielhaften Ausführung einer Treneinrichtung und Fig. 4
ein Prinzipbild zur Erläuterung der Funktion der Trenneinrichtung nach Fig. 3 und Fig. 5 ein drittes Ausführungsbeispiel mit einer zusätzlichen Filtereinrichtung.

Beschreibung der Erfindung

Fig. 1 zeigt eine Brennkraftmaschine 1 mit einem
Ansaugsystem 2 und einem Abgassammelsystem 3. Im
Abgassammelrohr 4 dieses Systems ist eine Trenneinrichtung 6 angeordnet, deren Aufbau anhand von Fig.
3 und 4 nachstehend noch erläutert wird. Diese Trenneinrichtung weist einen ersten Ausgang bzw. erste
Ausgänge 7 für Abgas auf, deren Anteil an festen
Abgasbestandteilen mit Hilfe der Trenneinrichtung 6
vermindert ist (künftig Reingas genannt) und einen
zweiten Ausgang für Abgas auf, das entsprechend mit
festen Abgasbestandteilen angereichert ist. Dieser
Ausgang 9 ist über eine Abgasrückführleitung 10 mit
dem Saugrohr 11 des Ansaugsystems 2 verbunden. In
dieser Leitung kann nun in Ergänzung eine Dosiereinrichtung 12 für die Menge des rückgeführten Abgases
angeordnet sein. Alternativ kann zur weiteren Anreicherung des Abgases mit festen Bestandteilen und
zur Reduzierung des Rückführvolumens in Serie eine
zweite Trenneinrichtung 6' angeordnet sein, die
gleich aufgebaut ist wie die Trenneinrichtung 6.
Diese Serienschaltung ist in Fig. 1 gestrichelt angedeutet.

Mit der beschriebenen Einrichtung wird eine Reinigung
des Abgases z. B. eine Entrußung derart vorgenommen,
daß mit Hilfe der in Fig. 3 näher beschriebenen
Trenneinrichtung, die ohne Zusatzenergie mit Fliehkraftmitteln arbeitet, das Abgas gereinigt wird, derart,

- 4 -

daß ein Teil des zuströmenden Abgases mit Rußbestandteilen angereichert wird, während ein anderer Teil
des Abgases weitgehendst von Rußanteilen befreit
wird. Dieses Reingas kann nun unbesorgt in die Umgebung oder zur weiteren katalytischen Nachbehandlung abströmen, während der mit Rußbestandteilen angereicherte Abgasstrom der Saugseite der Brennkraftmaschine zugeführt wird, wobei der rückgeführte Ruß
in vorteilhafter Weise in den Brennräumen der Brennkraftmaschine verbrannt.wird. Bei den bisher bekannten
Einrichtungen ist es zwar mit mehr oder weniger großem
Aufwand gelungen, Ruß und feste Bestandteile aus dem
Abgas z. B. auszufiltern, doch bestande ein Hauptproblem
bei solchen Einrichtungen darin, diese Filter zu warten,
d. h. es waren entweder die Filter auszuwechseln oder
in regelmäßigen Abständen zu reinigen und dann wiederum der ausgeschiedene Ruß aus Sammelbehältern zu entfernen. Die beschriebene Einrichtung arbeitet dagegen
mit dem geringstmöglichen Aufwand und sehr gutem
Reinigungserfolg. Sollte der Reinheitsgrad der am Ausgang 7 der Trenneinrichtung austretenden Abgase nicht
gut genug sein, so kann dieser Ausgang mit dem Eingang einer nachgeschalteten zweiten Trenneinrichtung
14 verbunden werden, deren zweiter Ausgang 15 in die
Abgasrückführleitung 10 mündet. Der erste Ausgang 16
(Reingas) dieser dem Reingasvolumenstrom der ersten
Trenneinrichtung 6 angepaßten zweiten Trenneinrichtung mündet dann, wie oben beschrieben, ins Freie oder
ist mit einer nachgeschalteten Abgasbehandlungseinrichtung verbunden.

Durch Kombination mehrerer Trenneinrichtungen kann der
Reinheitsgrad des ins Freie strömenden Abgases auf
ein gewünschtes Maß geführt werden. Ebenso kann die
Menge des zur Saugseite zurückströmenden, mit festen
Bestandteilen angereicherten Abgases den Verhältnissen
der Brennkraftmaschine angepaßt werden. Mit Hilfe der
z. B. durch eine Regeleinrichtung, die nicht weiter
gezeigt wird, gesteuerten Dosiereinrichtung 12 wird
weiterhin in üblicher Weise die Menge des rückgeführten Abgases gesteuert.

Dieses Verfahren zur Reinigung des Abgases ist auch
deshalb sehr vorteilhaft, da in der Regel sowieso zur
Einhaltung der Emissionsgrenzen Abgas rückgeführt werden
muß; aber auch zu anderen Zwecken, wie z. B. zur Verminderung der Klopfneigung der Brennkraftmaschine ist eine
Abgasrückführung vorteilhaft.

Fig. 2 zeigt eine alternative Ausgestaltung der in
Fig. 1 beschriebenen Einrichtung. Auch hier ist eine
Brennkraftmaschine 1 mit einem Saugrohr 11 und einem
Abgassammelrohr 4 vorgesehen. Vom Abgassammelrohr
zweigen in dieser Ausgestaltung mehrere Teilrohre,
4a und 4b ab, in denen Absperr- bzw. Drosselorgane
17, 18 angeordnet sind, die über eine Steuereinheit
19 je nach Bedarf analog oder aber in vorteilhafter
Weise getaktet getätigt werden können. Die Abgassammelrohre 4a bzw. 4b führen zum Eingang von Trenneinrichtungen 6a und 6b, die gleicherweise arbeiten
wie die oben beschriebenen Trenneinrichtungen
6 bzw. 14. Die zweiten Ausgänge dieser Trenneinrichtungen münden in eine gemeinsame Abgasrückführleitung 10, die ihrerseits in das Saugrohr 11 einmündet.

...

Mit dieser Einrichtung kann die Menge des rückgeführten, mit festen Bestandteilen angereicherten Abgases gesteuert werden und den Betriebsverhältnissen der Brennkraftmaschine angepaßt werden. Dies erfolgt mit Hilfe der Steuereinheit, die entsprechend den bekannterweise dafür in Frage kommenden Betriebsparametern die Drosselorgane 17 bzw. 18 ansteuert.

Wie bei Fig. 1 beschrieben, können den ersten Ausgängen 7a bzw. 7b der Trenneinrichtungen 6a bzw. 6b weitere Trenneinrichtungen nachgeschaltet werden, um den Reinheitsgrad des abströmenden Abgases weiter zu senken.

Als Trenneinrichtungen können an sich alle geeigneten Trenneinrichtungen verwendet werden, die es ermöglichen, einen mit festen Bestandteilen angereicherten Abgasstrom und einen weitgehend von festen Bestandteilen gesäuberten Abgasstrom zu erzeugen. Eine vorteilhafte Ausführung einer solchen Trenneinrichtung ist jedoch in Fig. 3 gezeigt. Diese Einrichtung besteht aus einem zylindrischen stirnseitig geschlossenen Rohr, der Wirbelkammer 21, in die tangential ein Hauptströmungskanal 22 eintritt, der einen sich auf die gesamte Länge der Wirbelkammer 21 erstreckenden flachen Rechteckquerschnitt aufweist. Dieser Kanal dient der Zuführung des zu trennenden Rohgases und der Abführung des angereicherten Rohgases. Am Eintritt zur Wirbelkammer 21 weist der Kanal auf der innen liegenden Seite eine Abströmkante 23 auf. Im weiteren Verlauf stromabwärts dieser Abströmkante 23 folgt der Kanal, der nunmehr zur Wirbelkammer hin offen ist, der äußeren Begrenzungswand der Wirbelkammer 21 und zweigt dann wieder von der Wirbelkammer ab unter Bildung des zweiten Ausgangs 9.

Beim Verlassen der Wirbelkammer 21 ist eine innen
liegende Anströmkante 24 ausgebildet. Der den zweiten
Ausgang bildende Teil des Hauptströmungskanals weist
dabei wie der eintretende Teil einen flachen rechteckförmigen Querschnitt auf.

An den Stirnseiten der Wirbelkammer sind koaxial
verlaufende Tauchrohre 26 und 27 angeordnet, die in
der Mitte der Wirbelkammer 21 offen enden. Die beiden
Rohre können auch einstückig sein, wobei in der Mitte
der Wirbelkammer diese Rohre entsprechend perforiert
wären.

Die außerhalb der Wirbelkammer liegenden Enden der
Tauchrohre 26 bzw. 27 sind dann als erste Ausgänge
7 entweder mit einer nachgeschalteten zweiten Trenneinrichtung 14 oder mit einer Abgasnachbehandlungseinrichtung anderer Art verbunden oder sie münden
in üblicher Weise oder z. B. über einen Schalldämpfer
ins Freie.

Anhand Fig. 4 wird die Funktionsweise dieser an sich
durch die DE-Patentschriften 23 00 869, 21 60 415
oder durch die DE-OS 25 38 664 bekannten Einrichtung
beschrieben. Aufgrund der besonderen Gehäuseformgebung
der Wirbelkammer 21 bildet sich in dem Wirbelkammerzylinder ein stehender ebener Wirbel aus, der etwa
die schraffierte Zone W in Anspruch nimmt und sich
bis an die Stirnseiten der Wirbelkammer erstreckt.
Stehend besagt, daß sämtliche Stromlinien im Wirbel
geschlossene Kreise sind. Theoretisch wird das im
Wirbel kreisende Strömungsvolumen nicht erneuert. Der
aus dem über den Hauptströmungskanal 22 eintretende,
vom Rohgasvolumenstrom abgezweigte Senkenvolumen-

...

strom, der über die Tauchrohre abgeführt wird, fließt
als Sekundärströmung symmetrisch in zwei Hälften von
der Hauptströmungskanalaußenwand in dünnen Schichten
über die Stirnseiten 29 bzw. 30 der Wirbelkammer und
an den Tauchrohren entlang zurück zur Mitte der Wirbelkammer, wo die Tauchrohre 26 bzw. 27 offen enden.
Im Hauptströmungskanal 22 findet nahe der Außenwand
in einer Grobabtrennungszone G bereits eine grobe
Reinigung des Abgases statt. Über die Stirnseiten 29
bzw. 30 verläuft eine Schichtströmung als ebene Wirbelsenken-Strömung mit spiraligen Stromlinien. Hier
werden noch feine Staubpartikel bis an die Einmündung
der Tauchrohre 26 bzw. 27 an den Stirnseiten 29 und
30 mitgeschleppt. Von dort setzt sich die Schichtströmung mit schraubenförmigen Stromlinien an den
Tauchrohren entlang bis zu deren Mündungen fort und
bildet die Feinabtrennzone F. Hier wird das von den
Tauchrohren abzuführende Abgasvolumen bei maximaler
Drehgeschwindigkeit in Reingas verwandelt. Auf die
festen Bestandteile in der Feinabtrennzone F wirkt
infolge der dort herrschenden Schraubenströmung in
radialer Richtung lediglich eine maximal mögliche
Zentrifugalkraft Z. Der radialen Verschiebung von Partikeln aus der Feinabtrennzone heraus wirkt keine Strömungskraft durch die Wirkung der Senke mehr entgegen,
so daß die festen Bestandteile über die Wirbelzone W
abgeführt werden.

Man erhält somit ohne zusätzlichen Energieaufwand und
mit geringen Strömungsenergieverlusten ein sehr gut gereinigtes Abgas. Das über den Hauptströmungskanal abfließende Abgas ist dagegen mit Partikeln angereichert,
die dann der Brennkraftmaschine zur Nachverbrennung zugeführt werden.

Ein drittes Ausführungsbeispiel ist in Fig. 5 dargestellt,
bei dem besondere Betriebszustände der Brennkraftmaschine
berücksichtigt werden können. Hier zweigt von der Abgasrückführleitung 10 eine Austrittsleitung 32 ab, in der
ein Feststoffilter 33 angeordnet ist und deren Ausgang
ins Freie führt. An der Verbindungsstelle zwischen Abgasrückführleitung und Austrittsleitung 32 ist ein Umschaltventil 34 vorgesehen, das über eine Betätigungseinrichtung 35 gesteuert von einem Steuergerät 36 entweder die Verbindung zwischen Abgasrückführleitung und
Austrittsleitung 32 schließt oder die Verbindung der
Abgasrückführleitung 10 zur Saugseite der Brennkraftmaschine schließt und den vom Ausgang 9 der Brenneinrichtung kommenden Abgasteilstrom über den Feststoff-
filter 33 abströmen läßt. Die Steuereinrichtung 36 wird
dabei in Abhängigkeit von Betriebsparametern der Brennkraftmaschine z. B. durch einen Vollastgeber oder Leerlaufgeber gesteuert, so daß bei diesen Betriebszuständen
kein Abgas zur Brennkraftmaschine zurückgeführt wird.
Mit Hilfe des Feststoffilters wird dann bei Betriebszuständen, bei denen kein Abgas rückgeführt werden kann,
der Ruß ausgefiltert. Bei hohen Drehzahlen der Brennkraftmaschine ist dabei die Abgastemperatur so hoch,
daß der Filter freigebrannt werden kann, insbesondere
dann, wenn in dem Filter katalytischwirksame Substanzen
eingebaut sind. Bei niedrigen Drehzahlen kann mit Hilfe
dieser katalytischen Substanzen die Nachverbrennung der
Rußbestanteile eingeleitet werden.

Da Betriebszustände, in denen kein Abgas rückgeführt
werden darf, nur relativ kurzfristig auftreten, wird
der Feststoffilter nicht übermäßig belastet. Andererseits
ist sichergestellt, daß auch in diesem Betriebsbereich
kein übermäßiger Anteil von festen Bestandteilen im Abgas
auftritt.

R.**6 6 4 0**
Bö/Jä 24.10.1980


Robert Bosch GmbH., 7000 Stuttgart 1


Ansprüche


1. Verfahren zur Entfernung von festen Bestandteilen
aus dem Abgas von Brennkraftmaschinen, insbesondere
von Rußbestandteilen, durch Rückführen der festen
Bestandteile zur Saugseite der Brennkraftmaschine,
dadurch gekennzeichnet, daß der Abgasstrom der Brennkraftmaschine in wenigstens einen ersten, zur Saugseite der Brennkraftmaschine führenden, mit festen
Abgasbestandteilen angereicherten Teilstrom und in
einen zweiten Teilstrom mit vermindertem Anteil an
festen Abgasbestandteilen aufgeteilt wird.


2. Vorrichtung zur Durchführung des Verfahrens nach
Anspruch 1, dadurch gekennzeichnet, daß der Abgasstrom der Brennkraftmaschine wenigstens einer Trenneinrichtung (6) zugeführt wird, mittels der unter
Einwirkung von Zentrifugalkräften ein mit festen Abgasbestandteilen angereicherter Teilstrom und ein
Abgasteilstrom mit vermindertem Anteil an festen Abgasbestandteilen erzeugbar ist, welche getrennten

. . .

Ausgängen der Trenneinrichtung zugeführt werden und
daß der Ausgang (9) für den angereicherten Teilstrom
mit der Saugseite der Brennkraftmaschine verbindbar
ist.

3. Vorrichtung nach Anspruch 2, dadurch gekennzeichnet,
daß mehrere Trenneinrichtungen (6a, 6b) parallel geschaltet sind und über eine Schalteinrichtung (17, 18,
19) in Abhängigkeit von Betriebsparametern zu- oder
abschaltbar sind.

4. Vorrichtung nach Anspruch 2 oder 3, dadurch gekennzeichnet, daß mehrere Trenneinrichtungen (6, 14 bzw.
6, 6') hintereinander geschaltet sind, wobei wenigstens
der Ausgang für den angereicherten Abgasteilstrom der
in der Reihe letzten Trenneinrichtung mit der Saugseite der Brennkraftmaschine verbunden ist.

5. Vorrichtung nach einem der vorstehenden Ansprüche,
dadurch gekennzeichnet, daß als Trenneinrichtung
eine an sich bekannte Einrichtung dient, die eine
Wirbelkammer (21) aufweist, welche über einen Teil
ihres radialen Wandbereichs mit einem tangential
dort vorbeiführenden, das zu trennende Abgas zuführenden Hauptströmungskanal (22) verbunden ist, der an

...

dieser Verbindungsstelle zur Wirbelkammer gekrümmt verläuft und den inneren Krümmungsradius mit der Wirbelkammer gemein hat und wobei aus dem Zentrum der Wirbelkammer koaxial zur Wirbelkammerachse Tauchrohre (26, 27) zum Abführen von Abgas mit vermindertem Anteil an festen Abgasbestandteilen nach außen führen.

6. Vorrichtung nach einem der vorstehenden Ansprüche, dadurch gekennzeichnet, daß in der den mit festen Abgasbestandteilen angereicherten Teilstrom zur Saugseite der Brennkraftmaschine führenden Abgasrückführleitung (10) eine Drosseleinrichtung (12, 34) vorgesehen ist, durch die die rückgeführte Abgasmenge veränderbar ist.

7. Vorrichtung nach Anspruch 6, dadurch gekennzeichnet, daß die Drosseleinrichtung als Schaltventil (34) ausgebildet ist, durch das in Abhängigkeit von Betriebsparametern der Brennkraftmaschine die von der Brenneinrichtung (6) abführende Abgasrückführleitung entweder mit der Saugseite der Brennkraftmaschine oder mit einer Austrittsleitung (32), in der ein Feststoffilter (33) angeordnet ist, verbunden wird.

8. Vorrichtung nach Anspruch 7, dadurch gekennzeichnet, daß der Feststoffilter katalytisch wirksame Substanzen enthält.

0051111

1/2

Fig.1

Fig. 2

Fig.3

Fig.4

Fig.5.

0051111

Nummer der Anmeldung

EP 81 10 5725

**Europäisches Patentamt**

## EUROPÄISCHER RECHERCHENBERICHT

| EINSCHLÄGIGE DOKUMENTE | | | | KLASSIFIKATION DER ANMELDUNG (Int. Cl.³) |
|---|---|---|---|---|
| Kategorie | Kennzeichnung des Dokuments mit Angabe, soweit erforderlich, der maßgeblichen Teile | betrifft Anspruch | | |
| XY | DE - A - 2 833 481 (INT. HARVESTER COMP.) | | | F 02 M 25/06 |
| | * Abbildungen; Seite 5, Zeile 6 - Seite 6, Zeile 20 * | 1,2,5-7 | | B 01 D 45/12 B 04 C 3/00 |
| | -- | | | |
| Y | FR - A - 2 321 926 (MESSERSCHMITT-BOLKOW-BLOHM) | | | |
| | * Abbildung 5; Seite 4, Zeilen 8-27 * | 5 | | |
| | & DE - A - 2 538 664 | | | |
| | ---- | | | **RECHERCHIERTE SACHGEBIETE (Int. Cl.³)** |
| | | | | B 01 D F 02 M B 04 C |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 11-02-1982 | BOGAERTS |

EPA form 1503.1 06.78